# FASCICULE DE BREVET EUROPEEN

(11) **EP 2 788 217 B1**
(45) Date de publication et mention de la délivrance du brevet: **25.04.2018**
(21) Numéro de dépôt: 12816687.3
(22) Date de dépôt: 07.12.2012
(51) Int. Cl.: B60K 35/00, B60K 37/06, G06F 3/03, G06F 3/048, G02B 27/01

(54) **INTERFACE HOMME-MACHINE POUR VÉHICULE AUTOMOBILE**
MENSCH-MASCHINE-SCHNITTSTELLE FÜR EIN KRAFTFAHRZEUG
MAN-MACHINE INTERFACE FOR MOTOR VEHICLE

(30) Priorité: 09.12.2011 FR 1103784
(43) Date de publication de la demande: 15.10.2014
(73) Titulaire: Valeo Comfort and Driving Assistance, 94046 Créteil Cedex (FR)
(72) Inventeur: EL KHOURY, Ziad, F-92160 Antony (FR)
(74) Mandataire: Pothmann, Karsten
(86) Numéro de dépôt international: PCT/FR2012/000508
(87) Numéro de publication internationale: WO 2013/083888

(56) Documents cités:
- EP-A1- 2 199 890
- WO-A1-2011/036788
- DE-A1-102007 058 795
- US-A1- 2005 140 929

## Description

La présente invention' se rapporte à une interface homme-machine pour véhicule automobile du type comprenant un écran et un moyen de commande sur lequel un utilisateur du véhicule peut agir pour modifier un paramètre du véhicule.

Il est connu d'équiper les véhicules automobiles d'interfaces homme-machine permettant de commander des équipements tels qu'une climatisation et/ou un poste radio et de prendre connaissance d'informations affichées sur un écran multifonctions relatives à, par exemple, un lecteur multimédia ou à une assistance de positionnement par satellite.

Le document FR2943151 décrit un exemple d'une telle interface homme-machine. Dans ce document, l'écran utilisé est doté d'éléments actifs pilotés tel qu'un écran LCD (« Liquid Crystal Display ») doté de segments de cristaux liquides ou encore un écran TFT (« Thin Film Transistor ») doté de pixels.

Cependant, l'utilisation de ce type d'écran impose des contraintes liées au style de l'écran, qui doit être nécessairement plan.

Une autre interface homme-machine est connue du US-A-2005/140929, utilisant un projecteur laser pour former une image.

Le but de la présente invention est donc de proposer une interface homme-machine munie d'un écran multifonctions. améliorée par rapport à ceux de l'état de la technique, l'interface homme-machine ayant une faible épaisseur. A cet effet, l'invention a pour objet une interface homme-machine pour véhicule automobile, ladite interface comprenant un écran de visualisation et un moyen de commande sur lequel un utilisateur du véhicule peut agir pour modifier un paramètre du véhicule. Selon l'invention, cette interface comprend également des moyens d'affichage et un projecteur laser, les moyens d'affichage étant agencés pour recevoir et afficher sur l'écran de visualisation une image provenant du projecteur laser.

Ainsi, la présente invention permet de disposer d'une interface homme-machine comprenant un écran multifonctions de coût réduit et n'impliquant pas de contraintes thermiques ou de style d'écran. De manière remarquable, grâce à l'utilisation de la projection laser, de meilleures performances optiques sont obtenues, notamment en termes de luminosité et de contraste de l'image sur l'écran de visualisation. Selon l'invention les moyens d'affichage comprennent :
- un écran diffuseur sur lequel est formée une image intermédiaire à partir de la projection de l'image sur ledit écran diffuseur par le projecteur laser ; et
- un miroir tridimensionnel pour déformer l'image intermédiaire afin de l'adapter à l'écran de visualisation.

Le miroir tridimensionnel est un miroir courbe permettant de réfléchir et d'agrandir l'image intermédiaire provenant de l'écran diffuseur afin que cette image apparaisse sans déformation sur l'écran de visualisation.

A titre d'exemple, l'écran diffuseur est un écran agrandisseur de pupille de sortie, plus connu sous l'acronyme anglais « Exit Pupil Expander ».

Ce type d'écran permet d'avoir une perception de grande image à l'aide d'une large pupille de sortie.

De préférence, le miroir tridimensionnel est un miroir présentant une surface de réflexion de forme libre, dite « free-form » en anglais. Une telle surface a une forme complexe non plane.

Cela permet d'avoir une grande liberté de réglage du miroir pour adapter l'image à l'écran de visualisation.

Le miroir tridimensionnel est réalisé, de préférence, par un dépôt d'au moins une couche réfléchissante sur un support, notamment en polycarbonate. Le dépôt de couches réfléchissantes est réalisé, par exemple, par vaporisation.

Cela permet d'avoir un miroir solide ayant de bonnes performances de réflexion et dont la fabrication reste d'un coût modéré.

Avantageusement, le projecteur laser comprend :
- trois sources laser, chacune des trois sources étant apte à émettre un faisceau lumineux monochrome, de préférence rouge, vert ou bleu ; et
- un dispositif de balayage comprenant au moins un miroir à système micro-électro-mécanique, dit miroir MEMS.

L'utilisation de trois sources laser pilotées de manière indépendante en puissance et en intensité permet d'obtenir la couleur et l'intensité souhaitées.

Un miroir MEMS est un miroir de taille microélectronique, dont la surface est inférieure à 1 mm². Dans une réalisation préférée, le miroir MEMS est monté sur deux axes pour réaliser un balayage sur l'écran diffuseur afin de former l'image sur cet écran. La fréquence de balayage est choisie, de préférence, supérieure ou égale à 60 Hz.

Ce balayage permet d'obtenir une image de grande résolution.

Les sources laser consistent, de préférence, en des diodes laser, ces dernières présentant l'avantage d'être compactes.

Avantageusement, le moyen de commande comprend une dalle tactile disposée sur l'écran de visualisation. Il est alors possible d'agir sur un paramètre du véhicule de manière ergonomique puisque la détection de l'action souhaitée par l'utilisateur est réalisée par simple contact. La dalle tactile peut par ailleurs être superposée sur l'écran de visualisation. Dans un tel cas, la dalle tactile est transparente.

Selon une réalisation particulière, le moyen de commande comprend un bouton poussoir ou rotatif solidaire de l'interface.

De préférence, le bouton poussoir ou rotatif est supporté par l'écran de visualisation. En d'autres termes, le moyen de commande est mis en oeuvre par une partie de l'écran de visualisation où sont installés la dalle tactile et/ou au moins un bouton poussoir et/ou au moins un bouton rotatif.

Cela permet d'avoir une façade entièrement lisse de l'interface. L'esthétique générale de l'interface est ainsi largement améliorée.

Selon une réalisation, l'écran de visualisation présente une surface courbe, cette surface étant celle traversée par l'image à projeté et visible par l'utilisateur du véhicule.

Une telle forme d'écran permet de faciliter son intégration dans l'habitacle du véhicule puisque la courbure de l'écran peut être adaptée à une courbure de la planche de bord ou de la console centrale qui reçoit cet écran.

De préférence, l'écran de visualisation présente un aspect dépoli. Cela permet d'éviter un phénomène de réflexion des rayons extérieurs à l'interface qui peuvent être de nature à éblouir l'utilisateur du véhicule. Cet aspect dépoli améliore également la qualité de la projection de l'image sur l'écran.

Avantageusement, l'interface homme-machine comprend des moyens de pilotage du projecteur laser.

Ces moyens peuvent consister en une carte de circuit imprimé sur laquelle sont intégrés des composants permettant, notamment, de transmettre au projecteur laser les données de l'image à projeter.

Encore avantageusement, l'interface homme-machine est munie d'un capot.

Ce capot couvre l'ensemble de l'interface en dehors de la face avant de l'écran de visualisation. En d'autres termes, ce capot recouvre la face technique de l'interface pour, d'une part, protéger les composants internes de l'interface et d'autre part assurer une homogénéité visuelle quand l'interface homme-machine selon l'invention est inactive.

De préférence, ce capot présente un fond noir, de sorte que l'écran de visualisation présente un aspect noir lorsqu'il est désactivé.

Avantageusement, l'épaisseur de l'interface est inférieure à 100 mm.

L'interface homme-machine présente ainsi une faible épaisseur particulièrement avantageuse pour son intégration dans une planche de bord de véhicule automobile. Cette faible épaisseur est obtenue grâce à l'utilisation du miroir tridimensionnel de forme libre. De manière remarquable, un agencement adéquat des différents moyens de l'interface permet d'obtenir une épaisseur inférieure à 20 mm au niveau des bords périphérique de l'interface homme-machine, contribuant ainsi à une perception subjective de très faible épaisseur de l'interface homme-machine.

D'autres caractéristiques, détails et avantages de l'invention ressortiront plus clairement à la lecture de la description donnée ci-après à titre indicatif en relation avec des dessins dans lesquels :
- la figure 1 représente une interface homme-machine vue de face, c'est-à-dire depuis l'habitacle du véhicule, selon un mode de réalisation de l'invention ;
- la figure 2 est un schéma illustrant la structure et le fonctionnement de l'interface homme-machine de la figure 1; et
- la figure 3 est un schéma illustrant la structure et le fonctionnement du projecteur laser mis en oeuvre dans l'interface homme-machine, selon un mode de réalisation de l'invention.

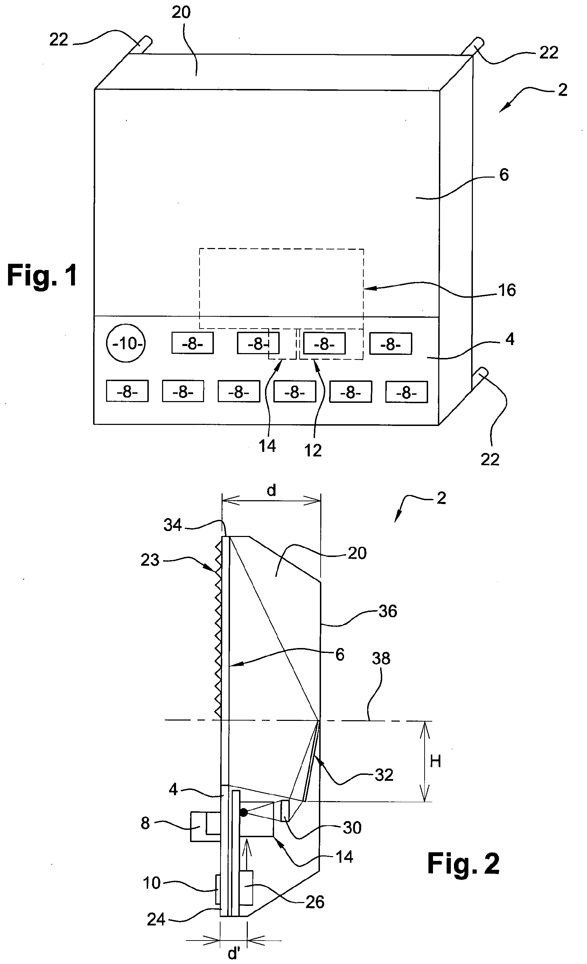

La figure 1 représente une interface homme-machine 2 destinée à être intégrée dans une planche de bord ou dans une console centrale d'un véhicule automobile.

L'interface homme-machine 2 comprend un tableau de commande 4 et un écran de visualisation 6 qui sont fournis sur au moins un support. De préférence, ce support est unique de sorte que l'écran de visualisation 6 s'étend au tableau de commande 4 pour que l'interface homme-machine 2 présente une façade entièrement lisse. Alternativement, le tableau de commande peut être un sous-ensemble distinct de l'écran de visualisation et rapporté sur ce dernier pour former l'interface selon l'invention. Dans une telle situation, il est avantageux qu'un premier plan passant par la face visible du tableau de commande soit confondu avec un deuxième plan qui passe par la face visible de l'écran de visualisation 6.

Le tableau de commande 4 comprend une pluralité de boutons poussoirs, désignés par la référence 8 ainsi qu'au moins un bouton rotatif, ou molette, 10. Les boutons 8, 10 permettent à un utilisateur du véhicule de transmettre des commandes à une carte électronique, non représentée, afin d'agir sur le fonctionnement d'un ou plusieurs équipements du véhicule, comme un dispositif de positionnement par satellite, un poste radio, une climatisation, un téléphone, une connexion Internet, etc. Les boutons poussoirs 8 sont de préférence encastrés dans le tableau de commande 4, de sorte à ce que leur plan sur lequel l'utilisateur appuie soit confondu avec le plan de l'écran de visualisation 6.

Les boutons 8, 10 constituent ainsi un moyen de commande sur lequel l'utilisateur peut agir pour modifier un paramètre du véhicule.

Une carte électronique 24 (figure 2) comprend un processeur qui gère le fonctionnement du tableau de commande 4, notamment ses connexions avec l'équipement commandé situé à l'extérieur de l'interface homme-machine 2 par l'intermédiaire d'un connecteur 12 situé à l'arrière de l'interface (représenté en pointillés), et permettant, par exemple, la transmission de signaux via un réseau multiplexé du véhicule du type CAN ou LIN.

Une telle carte électronique 24 forme également support mécanique du tableau de commande 4, et plus particulièrement d'au moins un bouton poussoir et/ou d'au moins un bouton rotatif.

L'écran de visualisation 6 est un écran multifonctions recouvert d'une dalle tactile, de technologie par exemple résistive, capacitive ou acoustique, afin qu'une fonction affichée sur l'écran de visualisation 6 puisse être activée/désactivée par contact d'une zone de l'écran dédiée à cette fonction. Cette dalle tactile constitue également un moyen de commande sur lequel l'utilisateur peut agir pour modifier un paramètre du véhicule. Ainsi, de façon générale, le moyen de commande de l'interface homme-machine 2 comprend la dalle tactile et/ou au moins un bouton poussoir 8 et/ou au moins un bouton rotatif 10.

L'écran de visualisation 6 peut avoir un style quelconque. Plus particulièrement, l'écran de visualisation 6 n'est pas nécessairement plan mais peut présenter une surface courbe lui donnant un aspect galbé, l'utilisation des moyens d'affichage et du projecteur laser détaillés plus loin facilitant l'emploi d'un écran galbé car les moyens d'affichage sont susceptibles d'adapter l'image à la forme courbe de l'écran de visualisation 6.

Selon l'invention, les informations ou images affichées sur l'écran de visualisation 6 proviennent d'un projecteur laser 14 et transitent par l'intermédiaire de moyens d'affichage 16 situés à l'arrière de l'écran de visualisation 6.

L'écran de visualisation 6 peut être fabriqué en verre ou bien en polycarbonate ou en un matériau plastique similaire, pour autant qu'il soit transparent. Il présente un aspect dépoli aux fins de la projection et pour des raisons d'anti-réflexion.

Un capot 20, de préférence noir, couvre l'ensemble des composants de l'interface homme-machine 2 situés derrière l'écran de visualisation 6 et/ou derrière le tableau de commande 4, pour former un seul bloc pouvant être intégré dans la planche de bord ou la console centrale par simple insertion puis fixation au moyen de pattes 22. Le capot 20 ferme ainsi la zone technique, c'est-à-dire la zone arrière de l'écran de visualisation 6 et du tableau de commande 4 de manière à couvrir tous les éléments constitutifs de l'interface homme-machine 2, en dehors de la face avant de l'écran de visualisation 6. L'écran de visualisation 6 présente ainsi un aspect noir lorsqu'il est désactivé.

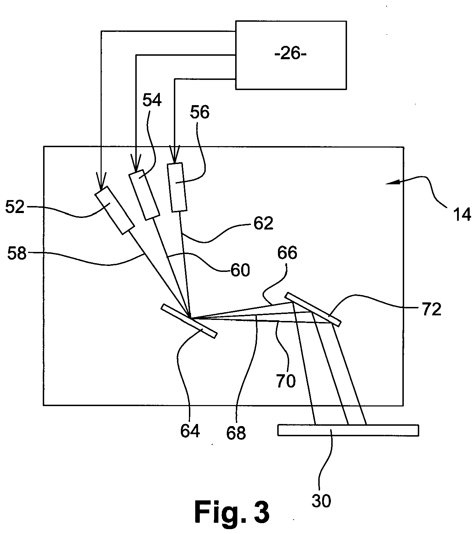

La structure et le fonctionnement détaillés de l'interface homme-machine 2 vont maintenant être décrits en référence aux figures 2 et 3.

En référence à la figure 2, l'écran de visualisation 6 est ici recouvert par un revêtement 23, visant à l'isoler de l'habitacle pour des raisons esthétiques et techniques, comme la protection des poussières et éventuelles projections. Ce revêtement 23 possède, de préférence, des propriétés anti-reflet, polarisantes, etc. Il peut également comporter de l'encre sérigraphiée pour réaliser des zones de masquage, par exemple.

En outre, l'interface homme-machine 2 comprend la carte de circuit imprimé 24 qui présente une fonction de carte vidéo. Cette carte vidéo 24 comprend un microcontrôleur 26 pour le pilotage du projecteur laser 14. Ce microcontrôleur 26 contrôle l'alimentation du projecteur laser 14 et lui transmet les données d'une image vidéo à projeter sur l'écran de visualisation 6.

Le projecteur laser 14 projette, après un traitement optique détaillé en référence à la figure 3, une image intermédiaire sur un écran diffuseur 30 inclus dans les moyens d'affichage 16. Cette image intermédiaire peut présenter une certaine déformation.

L'écran diffuseur 30 est un écran de projection, choisi ici du type à pupille de sortie (« Exit Pupil Expander »). Il est réalisé, par exemple, en verre dépoli.

Les moyens d'affichage 16 comprennent, outre l'écran diffuseur 30, un miroir tridimensionnel 32 de forme libre (« free-form »). Le miroir tridimensionnel 32, par exemple polygonal, réfléchit et adapte l'image intermédiaire provenant de l'écran diffuseur 30 pour que celle-ci soit projetée sans déformation sur toute la surface de l'écran de visualisation 6.

Le miroir tridimensionnel 32 est réalisé sur un support en polycarbonate sur lequel des couches réfléchissantes sont déposées, par exemple par vaporisation CVD (« Chemical Vapor Deposition »).

Selon le mode de réalisation représenté sur la figure 2, la carte vidéo 24 est disposée derrière le tableau de commande 4 afin de supporter les boutons 8, 10. En outre, le miroir tridimensionnel 32 est disposé au fond du capot 20 et l'écran diffuseur 30 est interposé entre la carte vidéo 24 et le fond du capot 20.

De manière remarquable, grâce à cet agencement des moyens d'affichage et à l'utilisation du miroir de forme libre 32, la chaîne de transmission optique depuis le projecteur laser 14 jusqu'à l'écran de visualisation 6 est réalisée dans un volume réduit, l'épaisseur de l'interface homme-machine 2 définie par la distance d entre un plan 34 tangent à l'écran de visualisation 6 et une face arrière 36 du capot 20 étant inférieure à 100 mm, de préférence égale à 50 mm. La position de la face arrière 36 du capot 20 est conditionnée par l'angle d'inclinaison du miroir tridimensionnel 32 par rapport à un axe vertical. C'est l'extrémité du miroir 32 opposée au projecteur laser 14 par rapport au miroir 32 qui conditionne la distance d. Une telle distance est maintenue inférieure à 100 mm quand une hauteur H, correspondant à la projection du miroir 32 sur l'axe vertical, est comprise entre 15 et 50 mm et l'angle d'inclinaison du miroir 32 par rapport à l'axe vertical est compris entre 5 et 20°.

En outre, en disposant le miroir tridimensionnel 32 au voisinage du plan médian 38 de la face avant de l'interface homme-machine 2, il est possible d'avoir une épaisseur d' sur les bords avant de l'interface homme-machine 2 inférieure à 20 mm.

De manière avantageuse, cet agencement du miroir tridimensionnel 32 permet d'éviter de réfléchir une lumière externe vers l'écran de visualisation 6, lorsque l'interface homme-machine 2 est désactivée. Cela garantit l'aspect noir de l'écran de visualisation 6 lorsqu'il est inactif.

La structure du projecteur laser 14 est détaillée dans la suite de la description en référence à la figure 3.

Le projecteur laser 14 comprend trois sources laser 52, 54, 56, typiquement des diodes laser, chaque source émettant un rayon lumineux 58, 60, 62 consistant en une seule couleur comme rouge, vert ou bleu (RVB), par exemple. La puissance et l'intensité de chacune des sources est pilotée, de manière indépendante des autres sources, par le microcontrôleur 26 pour obtenir la couleur et l'intensité souhaitées de l'image.

Les rayons lumineux 58, 60, 62 se réfléchissent sur un miroir semi réfléchissant 64 pour former des rayons lumineux composites rouge- vert- bleu (RVB) 66, 68, 70.

Les rayons composites 66, 68, 70 se réfléchissent sur un miroir à balayage 72 à système micro-électro-mécanique MEMS. Le miroir MEMS 72 a une surface inférieure à 1 mm².

Le miroir MEMS 72 est apte à tourner autour de deux axes de rotation pour réaliser un balayage, par exemple à une fréquence de 60 Hz, de l'écran diffuseur 30 afin de former l'image intermédiaire sur cet écran 30.

Avantageusement, des moyens de protection sont prévus, par exemple au niveau du microcontrôleur 26, pour couper l'alimentation des sources laser 52, 54, 56 en cas d'arrêt de fonctionnement du miroir MEMS 72.

Bien entendu, d'autres modes de réalisation encore peuvent être envisagés.

## Revendications

1. Interface homme-machine (2) pour véhicule automobile, ladite interface (2) comprenant un écran de visualisation (6) et un moyen de commande sur lequel un utilisateur du véhicule peut agir pour modifier un paramètre du véhicule, comprenant également des moyens d'affichage (16) et un projecteur laser (14), les moyens d'affichage (16) étant agencés pour recevoir et afficher sur l'écran de visualisation (6) une image provenant du projecteur laser (14), **caractérisée en ce que** les moyens d'affichage (16) comprennent :
- un écran diffuseur (30) sur lequel est formée une image intermédiaire à partir de la projection de l'image sur ledit écran diffuseur (30) par le projecteur laser (14), et
- un miroir tridimensionnel (32) pour déformer l'image intermédiaire afin de l'adapter à l'écran de visualisation (6).

2. Interface homme-machine (2) selon la revendication 1, dans laquelle le miroir tridimensionnel (32) est un miroir présentant une surface de réflexion de forme libre.

3. Interface homme-machine (2) selon la revendication 1 ou 2, dans laquelle le projecteur laser (14) comprend :
- trois sources laser (52, 54, 56), chacune des trois sources étant apte à émettre un faisceau lumineux monochrome (58, 60, 62), de préférence rouge, vert ou bleu ; et
- un dispositif de balayage comprenant au moins un miroir à système micro-électro-mécanique (72), dit miroir MEMS.

4. Interface homme-machine (2) selon l'une quelconque des revendications précédentes, dans laquelle le moyen de commande comprend une dalle tactile disposée sur l'écran de visualisation (6).

5. Interface homme-machine (2) selon l'une quelconque des revendications précédentes, dans laquelle le moyen de commande comprend un bouton poussoir (8) ou rotatif (10) solidaire de l'interface (2).

6. Interface homme-machine (2) selon la revendication 5, dans laquelle le bouton poussoir (8) ou rotatif (10) est supporté par l'écran de visualisation (6).

7. Interface homme-machine (2) selon l'une quelconque des revendications précédentes, dans laquelle l'écran de visualisation (6) présente une surface courbe.

8. Interface homme-machine (2) selon l'une quelconque des revendications précédente, dans laquelle l'écran de visualisation (6) présente un aspect dépoli.

9. Interface homme-machine (2) selon l'une quelconque des revendications précédentes, comprenant des moyens de pilotage (24) du projecteur laser (14).

10. Interface homme-machine (2) selon l'une quelconque des revendications précédentes, ladite interface étant munie d'un capot (20).

11. Interface homme-machine (2) selon l'une quelconque des revendications précédentes, dans laquelle l'épaisseur (d) de l'interface homme-machine (2) est inférieure à 100 mm.

## Patentansprüche

1. Mensch-Maschine-Schnittstelle (2) für Kraftfahrzeuge, wobei die Schnittstelle (2) ein Anzeigegerät (6) und ein Steuermittel, auf das ein Bediener des Fahrzeugs einwirken kann, um einen Parameter des Fahrzeugs zu ändern, umfasst, umfassend ebenfalls Anzeigemittel (16) und einen Laserprojektor (14), wobei die Anzeigemittel (16) zum Empfangen und Anzeigen eines vom Laserprojektor (14) stammenden Bilds auf dem Anzeigegerät (6) ausgebildet sind, **dadurch gekennzeichnet, dass** die Anzeigemittel (16) umfassen:
- einen Streuschirm (30), auf dem ein Zwischenbild aus der Projektion des Bilds auf den Streuschirm (30) durch den Laserprojektor (14) gebildet wird, und
- einen dreidimensionalen Spiegel (32) zum Verformen des Zwischenbilds, um dieses an das Anzeigegerät (6) anzupassen.

2. Mensch-Maschine-Schnittstelle (2) nach Anspruch 1, wobei der dreidimensionale Spiegel (32) ein eine freie Reflexionsfläche aufweisender Spiegel ist.

3. Mensch-Maschine-Schnittstelle (2) nach Anspruch 1 oder 2, wobei der Laserprojektor (14) umfasst:
- drei Laserquellen (52, 54, 56), wobei jede der drei Quellen zum Ausstrahlen eines einfarbigen Lichtbündels (58, 60, 62), vorzugsweise in Rot, Grün oder Blau, ausgebildet ist; und
- eine Abtastvorrichtung umfassend wenigstens einen Spiegel mit einem mikroelektromechanischen System (72), einen sogenannten MEMS-Spiegel.

4. Mensch-Maschine-Schnittstelle (2) nach einem der vorhergehenden Ansprüche, wobei das Steuermittel einen am Anzeigegerät (6) angeordneten Touchscreen umfasst.

5. Mensch-Maschine-Schnittstelle (2) nach einem der vorhergehenden Ansprüche, wobei das Steuermittel einen mit der Schnittstelle (2) verbundenen Drucktaster (8) oder Drehknopf (10) umfasst.

6. Mensch-Maschine-Schnittstelle (2) nach Anspruch 5, wobei der Drucktaster (8) oder Drehknopf (10) vom Anzeigegerät (6) unterstützt wird.

7. Mensch-Maschine-Schnittstelle (2) nach einem der vorhergehenden Ansprüche, wobei das Anzeigegerät (6) eine gekrümmte Oberfläche aufweist.

8. Mensch-Maschine-Schnittstelle (2) nach einem der vorhergehenden Ansprüche, wobei das Anzeigegerät (6) ein mattes Aussehen aufweist.

9. Mensch-Maschine-Schnittstelle (2) nach einem der vorhergehenden Ansprüche, umfassend Mittel zum Steuern (24) des Laserprojektors (14).

10. Mensch-Maschine-Schnittstelle (2) nach einem der vorhergehenden Ansprüche, wobei die Schnittstelle mit einer Haube (20) ausgestattet ist.

11. Mensch-Maschine-Schnittstelle (2) nach einem der vorhergehenden Ansprüche, wobei die Stärke (d) der Mensch-Maschine-Schnittstelle (2) kleiner ist als 100 mm.

## Claims

1. Man-machine interface (2) for a motor vehicle, said interface (2) comprising a viewing screen (6) and a control means, on which a user of the vehicle can act in order to modify a parameter of the vehicle, and also comprising display means (16) and a laser projector (14), the display means (16) being arranged in order to receive and display an image coming from the laser projector (14) on the viewing screen (6), **characterized in that**, the display means (16) comprise:
- a diffuser screen (30) on which an intermediate image is formed from the projection of the image onto said diffuser screen (30) by the laser projector (14); and
- a three-dimensional mirror (32) for deforming the intermediate image in order to adapt it to the viewing screen (6).

2. Man-machine interface (2) according to Claim 1, wherein the three-dimensional mirror (32) is a mirror having a freeform reflection surface.

3. Man-machine interface (2) according to Claim 1 or 2, wherein the laser projector (14) comprises:
- three laser sources (52, 54, 56), each of the three sources being capable of emitting a monochromatic light beam (58, 60, 62), preferably red, green or blue; and
- a scanning device comprising at least one microelectromechanical system mirror (72), referred to as a **MEMS** mirror.

4. Man-machine interface (2) according to any one of the preceding claims, wherein the control means comprises a touch screen arranged on the viewing screen (6) .

5. Man-machine interface (2) according to any one of the preceding claims, wherein the control means comprises a pushbutton (8) or rotary button (10) integral with the interface (2).

6. Man-machine interface (2) according to Claim 5, wherein the pushbutton (8) or rotary button (10) is supported by the viewing screen (6).

7. Man-machine interface (2) according to any one of the preceding claims, wherein the viewing screen (6) has a curved surface.

8. Man-machine interface (2) according to any one of the preceding claims, wherein the viewing screen (6) has a frosted appearance.

9. Man-machine interface (2) according to any one of the preceding claims, comprising means (24) for driving the laser projector (14).

10. Man-machine interface (2) according to any one of the preceding claims, said interface being provided with a cover (20).

11. Man-machine interface (2) according to any one of the preceding claims, wherein the thickness (d) of the man-machine interface (2) is less than 100 mm.
